Europäisches Patentamt

European Patent Office

Office européen des brevets

(11) Veröffentlichungsnummer: **0 193 810**
**B1**

(12) ## EUROPÄISCHE PATENTSCHRIFT

(45) Veröffentlichungstag der Patentschrifft:
21.03.90

(51) Int. Cl. ⁵: **F 24 D  3/14,  E 06 B  3/26**

(21) Anmeldenummer: **86102258.0**

(22) Anmeldetag: **21.02.86**

(54) System zum Temperieren von Räumen.

(30) Priorität: **06.03.85 DE 3507951**

(43) Veröffentlichungstag der Anmeldung:
**10.09.86 Patentblatt 86/37**

(45) Bekanntmachung des Hinweises auf die Patenterteilung:
**21.03.90 Patentblatt 90/12**

(84) Bennante Vertragsstaaten:
**AT BE CH DE FR GB IT LI LU NL SE**

(56) Entgegenhaltungen:
**CH-A-331 442**
**DE-A-1 810 493**
**DE-A-1 932 591**
**DE-A-2 621 186**
**DE-A-2 932 284**
**DE-B-2 343 168**
**GB-A-243 630**
**GB-A-806 503**
**GB-A-807 649**

(73) Patentinhaber: **Ingenieurbüro Timmer GmbH**
**Ohligser Strasse 37**
**D-5657 Haan (DE)**

(72) Erfinder: **Reichel, Wolfgang, Dr.-Ing.**
**Westfalenstrasse 54**
**D-5860 Iserlohn (DE)**
Erfinder: **Timmer, Hans Heinrich, Dipl.-Ing.**
**Neckarweg 25**
**D-4006 Erkrath 2 (DE)**

(74) Vertreter: **Patentanwälte Dr. Solf & Zapf**
**Schlossbleiche 20 Postfach 13 01 13**
**D-5600 Wuppertal 1 (DE)**

EP 0 193 810 B1

**Beschreibung**

Die vorliegende Erfindung betrifft ein Raumtemperierungselement, bestehend aus mindestens einem metallischen Wärmeübertragungsprofil sowie einer Rohrleitung für ein Wärmetransportmedium.

Aus der DE-A-1 932 591 ist ein Raumtemperierungselement bekannt, bei dem die Führung der Rohrleitung in einer Aufnahme, die von einem Zusatzstück abgeschlossen wird, erfolgt. Dieses Zusatzstück preßt die Rohrleitung im Preßsitz an die Aufnahme. Dieses bedeutet, daß – bedingt durch den Preßsitz – kein Bewegungsausgleich zwischen der Rohrleitung und dem Wärmeübertragungsprofil erfolgen kann. Dies ist aber von Nachteil, da die verwendeten Materialien unterschiedliche Ausdehnungseigenschaften besitzen, so daß es innerhalb des Heizungselementes zu Verspannungen kommen kann, die, insbesondere bei längeren Profilen, zu einer mechanischen Verbindung des ganzen Profils führen und zusätzlich aber auch eine Geräuschentwicklung verursachen können, die im Betrieb äußerst störend ist. Zusätzlich kann es hierbei zu einer elektrischen Elementbildung kommen, was ebenfalls nachteilig, insbesondere in bezug auf das Korrosionsverhalten der Teile, ist.

Aus der DE-B-2 343 168 ist ein Raumtemperierungselement bekannt, das als im Querschnitt U-förmiges Verblendungselement ausgebildet ist und in dessen beiden Ecken das Wärmemedium transportierende Rohre im Preßsitz angeordnet sind. Auch bei diesem Raumtemperierungselement treten die vorstehend beschriebenen Schwierigkeiten des Bewegungsausgleiches, der Geräuschentwicklung und der elektrischen Elementbildung auf. Zudem ergibt sich der Nachteil, daß die Ecken des Raumtemperierungselementes einen relativ großen Radius aufweisen müssen, um eine möglichst großflächige Anlage für eine gute Wärmeübertragung zwischen den Rohren und dem Wärmeübertragungsprofil zu gewährleisten. Hierdurch ist die Gestaltungsmöglichkeit dieses Raumtemperierungselementes sehr eingeschränkt.

Aus der GB-A-243 630 ist eine Boden- oder Wandheizung bekannt, bei der die das Wärmemedium führenden Rohre in Kunststoffmaterial eingebettet sind, das die fertige Bodenfläche oder dergl. bildet. Hierbei sind die Rohre in rohrförmige oder U-förmige Umhüllungen eingelegt, in denen sie sich frei bewegen können. Diese Umhüllungen weisen an ihrer Innenseite eine Metallbeschichtung auf, um einen besseren Wärmeübergang zu gewährleisten. Damit ist hier ein unmittelbarer, metallischer Kontakt zwischen den Rohren und der metallischen Beschichtung vorhanden, wodurch wiederum eine elektrische Elementbildung sowie Bewegungsgeräusche begünstigt werden. Zudem liegt aber aufgrund der relativ lockeren Anlage zum Umhüllungsprofil, das als Wärmeübertragungsprofil dient, ein relativ schlechter Wärmeübergang vor.

Der vorliegenden Erfindung liegt die Aufgabe zugrunde, ein Raumtemperierungselement zu schaffen, das eine Verbesserung gegenüber dem Stand der Technik darstellt, indem es einen erhöhten Wirkungsgrad besitzt, d. h. der Wärmeübergang von den von der Wärmetransportflüssigkeit durchströmten Rohren zu dem Wärmeübertragungsprofil ist verbessert.

Erfindungsgemäß wird dies mit einem Raumtemperierungselement erreicht, das aus mindestens einem metallischen Wärmeübertragungsprofil sowie einer Rohrleitung für ein Wärmetransportmedium besteht, die an einer die Rohrleitung teilweise umfassenden Wärmeleitkontaktfläche anliegt, wobei die Wärmeleitkontaktfläche über mindestens einen Steg zur Wärmeleitung mit dem Wärmeübertragungsprofil einstückig verbunden ist, für die das Wärmeübertragungsprofil die Form einer Hohlstütze und/oder eines Hohlriegels hat und mit seinen Seitenwänden einen Hohlraum umschließt, in dem die mit den Seitenwänden wärmeleitend verbundene Wärmeleitkontaktfläche mit der hier befestigten Rohrleitung in Längsrichtung des Wärmeübertragungsprofils verläuft, wobei zwischen der Wärmeleitkontaktfläche und der Rohrleitung ein aus Kunststoff bestehendes Wärmeleitkontaktelement in Form eines Kontaktfilms, einer Folie, einer Manschette oder einer Beschichtung angeordnet ist, und die Rohrleitung auf der Wärmeleitkontaktfläche derart klemmend gehalten ist, daß aufgrund des Wärmeleitkontaktelementes eine Relativbewegung zwischen der Rohrleitung und der Wärmeleitkontaktfläche bei optimalen Wärmefluß möglich ist.

Vorteilhafte Ausführungen der Erfindung sind in den Unteransprüchen enthalten. Anhand der in den beiliegenden Zeichnungen dargestellten Ausführungsbeispiele wird die Erfindung nunmehr näher erläutert.

Es zeigen:

Fig. 1      einen Schnitt durch ein Rahmenelement, bestehend aus mehreren erfindungsgemäßen Raumtemperierungselementen,

Fig. 2 - 12 weitere Schnitte durch erfindungsgemäße Ausgestaltungen von Rahmenelementen mit erfindungsgemäßen Raumtemperierungselementen,

Fig. 13     einen Vertikalschnitt durch eine Fensterkonstruktion mit wärmegedämmten Brüstungselement mit einem waagerechten erfindungsgemäßen Raumtemperierungselement als Brüstungsriegel,

Fig. 14     einen Horizontalschnitt durch eine Fensterverglasung mit senkrechten Doppelpfosten und einem erfindungsgemäß integrierten Raumtemperierungselement,

Fig. 15 einen Horizontalschnitt durch einen Wandanschluß mit vorgehängter Fassade und Wärmedämmung, äußerem Sonnenschutz und zu öffnendem Fenster sowie einem integrierten erfindungsgemäßen Raumtemperierungselement.

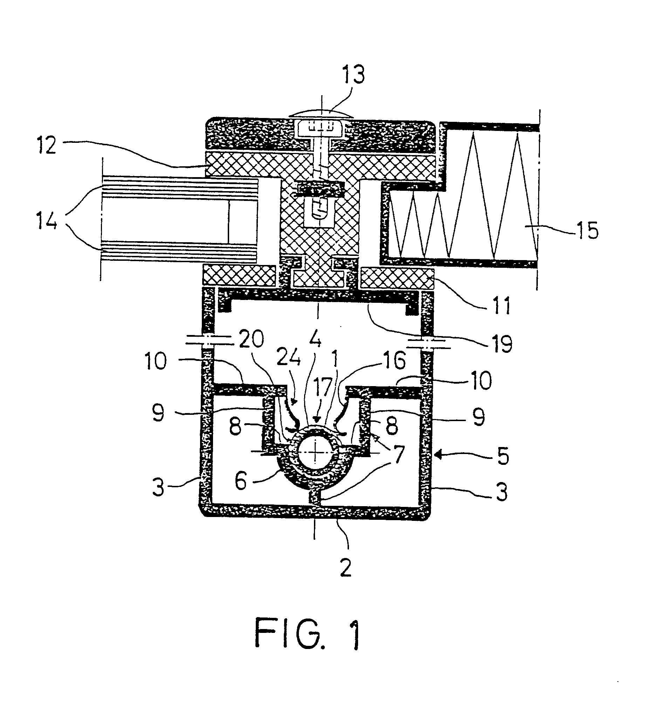

Wie sich aus Fig. 1 ergibt, besteht ein erfindungsgemäßes Systemelement, das Teil einer Gebäudeaußenwand oder – fassade ist, aus einer Rohrleitung 1, die von einem Wärmeübertragungsmedium, insbesondere einer Transportflüssigkeit, z. B. Wasser, durchflossen wird, und aus einem Wärmeübertragungsprofil 5, das mit der Rohrleitung 1 über ein Wärmeleitkontaktelement 4 verbunden ist. Bei diesem aus Kunststoff bestehenden Wärmeleitkontaktelement 4 kann es sich um einen Kontaktfilm handeln oder um eine Folie oder eine Beschichtung bzw. eine Manschette.

Weiterhin ist eine Wärmeleitkontaktfläche 6 vorgesehen, die in kreisbogenförmiger Anpassung, insbesondere als halbkreisförmiges Profil (Halbschalenprofil), an die Rohrleitung 1 verläuft und die über Wärmeleitstege 7 mit der Innenseite des Wärmeübertragungselementes 5 verbunden ist. Auch das Wärmeübertragungselement bzw. - profil 5 ist damit getrennt von der wärme- oder kälteführenden Rohrleitung 1 angeordnet und wird von den z. B. aus Stützen oder Riegeln bestehenden Gerüstelementen gebildet, so daß es gleichzeitig zur Aufnahme der Gebäudefassade dient. Durch eine integrierte Klemmvorrichtung 24 wird die Rohrleitung 1 über das Wärmeleitkontaktelement 4 an die Wärmeleitkontaktfläche 6 angepreßt. Bei dem Wärmeübertragungsprofil 5 handelt es sich vorzugsweise um eine Stütze oder einen Riegel aus Metall, die gemeinsam als Gerüstelement ein Gerüst bilden, wie es zum Aufbau von Fassadenwänden in Gebäuden verwendet wird. Diese Metallgerüste bestehen vorzugsweise aus Aluminium, jedoch können auch andere Materialien mit entsprechenden Eigenschaften verwendet werden. Vorzugsweise besitzen die Gerüstelemente einen rechteckigen Querschnitt, jedoch sind auch andere Querschnittsformen, beispielsweise kreisförmige Querschnitte, möglich. Die Wärmeübertragungsprofile 5 können in die Raumunschließung integriert und im Bereich von Fenstern, Wänden oder Decken angeordnet werden. Als Wärmetransportmedium wird vorzugsweise Wasser verwendet, dem in bekannter Weise korrosionshemmende Zusätze beigegeben sind.

Wie sich aus Fig. 1 ergibt, dient das erfindungsgemäße Systemelement zur Aufnahme der Gebäudefassade, die beispielsweise aus Isolierglasscheiben 14 oder Fenstern sowie Außenbrüstungs- oder Außenwandisolierwänden 15 bestehen kann. Diese Fassadenelemente werden mittels einer Isolierungshalterung 12 und einer Schraubbefestigung 13 am erfindungsgemäßen Systemelement befestigt. Weiterhin ist vorzugsweise vorgesehen, daß die Gebäudefassade durch Isolierungsprofile 11 vom Wärmeübertragungsprofil 5, d. h. der Stütze oder dem Riegel, zum Vermeiden von Wärmeverlusten thermisch getrennt ist. Der zwischen der Rohrleitung 1 und dem Wärmeübertragungsprofil 5 dargestellte Wärmetransport von Wärmetransportmedium in der Rohrleitung 1 über die Rohrwand der Rohrleitung 1, das Wärmeleitkontaktelement 4, die Wärmeleitkontaktfläche 6 und die Wärmeleitstege 7 an das Wärmeübertragungselement bzw. -profil 5 erfolgt erfindungsgemäß so, daß eine mittelbare (indirekte) Wärmeübertragung zwischen der Rohrleitung 1 und dem Wärmeübertragungsprofil 5 gegeben ist.

Der wesentliche Vorteil der vorliegenden Erfindung besteht darin, daß die wärme- oder kälteführenden Rohrleitungen 1 von den Wärmeübertragungsprofilen 5 getrennt sind, wodurch das Umwälzvolumen des im erfindungsgemäßen System strömenden Wärmetransportmittels minimiert wird. Weiterhin ergibt sich damit der Vorteil, daß die Stützen und Riegel praktisch drucklos werden, wodurch die Fertigung wesentlich vereinfacht wird und die Wärmeübertragungseigenschaften leichter und optimaler geregelt werden können. Darüber hinaus wird eine hohe Betriebssicherheit erreicht, da die Stützen und Riegel drucklos sind. Dabei ergibt sich erfindungsgemäß eine hohe Wirtschaftlichkeit, da geringe Wärmeverluste auftreten sowie eine erhebliche Materialersparnis wegen der geringen Querschnittsdimensionen. Weiterhin wird eine Kostensenkung dadurch erreicht, daß keine zusätzlichen Gerüste für die Montage erforderlich sind und ebenfalls durch die Möglichkeit einer kostensparenden Herstellung, da keine Präzisionsteile hierzu benötigt werden. Das erfindungsgemäße System ist bei Neubauten und Altbauten einsetzbar, da auch eine nachträgliche Montage möglich ist.

Wie in Fig. 1 dargestellt ist, ist die halbschalenförmige Wärmeleitkontaktfläche 6 über drei Stege 7 mit dem Wärmeübertragungsprofil 5, und zwar jeweils über einen Steg 7, mit einer Wandfläche des Wärmeübertragungsprofils 5 verbunden. Einer der Stege 7 ist der Aufnahmeöffnung 20 der Wärmeleitkontaktfläche 6 gegenüberliegend ausgebildet, und die beiden anderen Stege 7 sind gegenüber diesem Steg um 90° versetzt. Die letzteren Stege beginnen an den Längsrändern 8 der halbschalenförmigen Wärmeleitkontaktfläche 6 und verlaufen mit einem Stegabschnitt zunächst parallel zur Isolierglasscheibe 14 und dann mit einem weiteren Stegabschnitt senkrecht zu dem vorhergehenden Abschnitt, wodurch sich ein Verlängerungsabschnitt 9 ergibt, der dann wiederum in einen parallel zur Isolierglasscheibe verlaufenden Abschnitt 10 übergeht. Die Stegabschnitte 10 enden in den zur Isolierglasscheibe senkrechten Seitenwänden 3 des Wärmeübertragungsprofils 5. Der Steg 7 endet ausgehend von der Wärmeleitkontaktfläche 6 in der zur Isolierglasscheibe 14 parallelen Seitenwand 2 des Wärmeübertragungsprofils 5. An den freien Enden der Stegabschnitte 10 sind Klemmelemente, die als Federarme 16 ausgebildet sind, angeformt. Diese Federarme 16 bilden die Klemmvorrichtung 24, um die Rohrleitung 1 innerhalb der halbschalenförmigen Wärmeleitkontaktfläche 6 zu fixieren, so daß ein inniger Berührungskontakt zwischen beiden besteht. Dabei ist es zweckmäßig, wenn das Halbschalenprofil der Wärmeleitkontaktfläche 6 sich über die gesamte Länge der Rohrleitung 1 erstreckt. Die einander gegenüberliegenden federnden Haltearme 16 sind an ihren freien Enden voneinander weg abgebogen und schließen eine Einstecköffnung 17 ein, durch die die Rohrleitung 1 hindurchgeschoben wird, wobei dann die Haltearme 16 auseinandergespreizt werden, und nach dem Hindurchdrücken der Rohrleitung 1 federn die Haltearme 16 zurück und liegen mit ihren abgebogenen Enden gegen die Rohrleitung 1 an und fixieren diese in der Wärmeleitkontaktfläche 6.

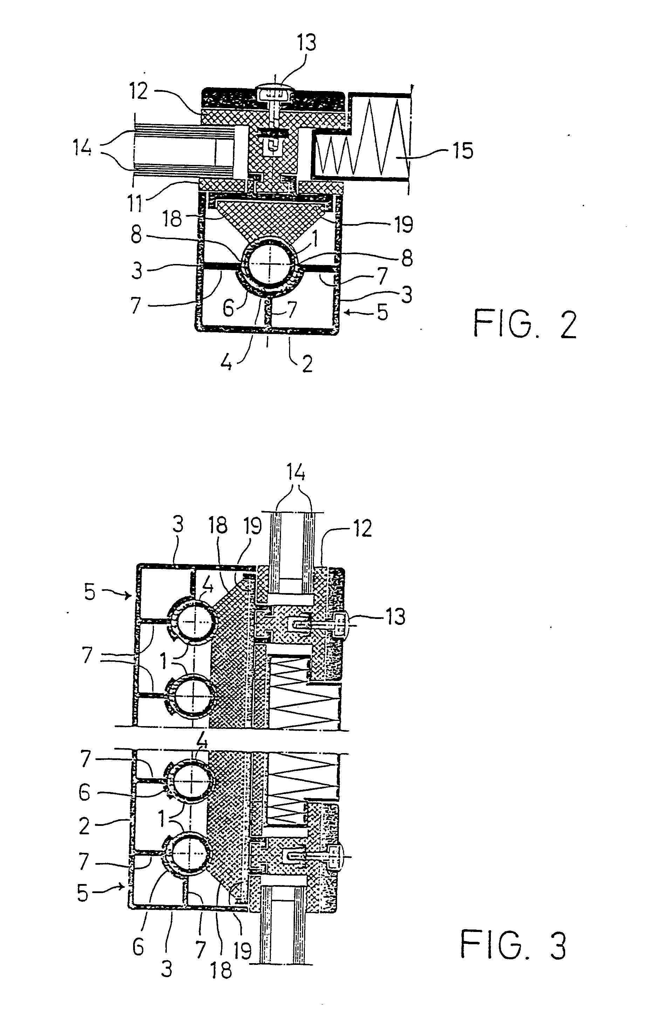

In Fig. 2 ist eine alternative Ausführungsform der Erfindung zu Fig. 1 dargestellt, wobei gleiche Teile wie in Fig. 1 mit denselben Bezugsziffern versehen sind. Bei dieser Ausführungsform sind die in den vertikalen Seitenwänden 3 endenden Stege 7 derart ausgebildet, daß sie ausgehend von den Rändern 8 der Wärmeleitkontaktfläche 6 parallel zur Isolierglasscheibe 14 verlaufen. Durch ein Stützisolierelement 18, das im Querschnitt etwa kegelstumpfförmig ausgebildet ist und zwischen Rohrleitung und einer Trägerwand 19 eingesetzt ist, wird die Rohrleitung 1 von der Außenfassade wärmedämmend und rohrführend in der Wärmeleitkontaktfläche 6 fixiert. An der Trägerwand 19 ist das aus den Seitenwänden 2, 3, den Stegen 7 und der Wärmeleitkontaktfläche 6 bestehende, einstückige Wärmeübertragungsprofil 5 mit geeigneten Befestigungsmitteln lösbar befestigt.

In Fig. 3 ist eine weitere Ausführungsform der Erfindung dargestellt, wobei gleiche Teile wie in den Fig. 1 und 2 mit denselben Bezugsziffern versehen sind. Hierbei ist im Unterschied zu den vorhergehenden Ausführungsformen innerhalb der Wärmeübertragungsprofile eine Mehrfachrohranordnung aus Leitungsrohren 1 dargestellt. Diese Ausführungsform eines erfindungsgemäßen Elements kann insbesondere als Wand- oder Brüstungsheizung verwendet werden, wobei im übrigen dieselbe Funktion gegeben ist, wie bei den vorbeschriebenen Ausführungsbeispielen.

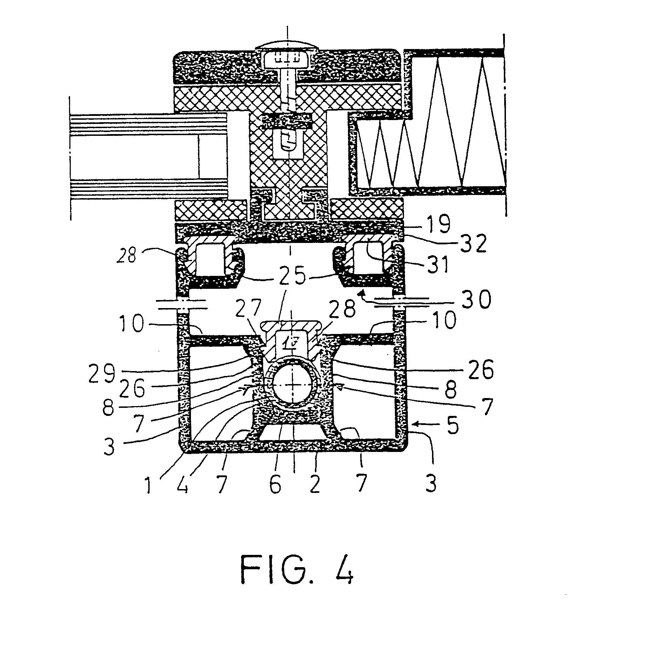

In Fig. 4 ist eine weitere Ausführungsform der Erfindung gezeigt, wobei gleiche Teile wie in den Fig. 1 bis 3 mit denselben Bezugsziffern versehen sind. Insbesondere die Wärmeleitstege 7 sind andersartig angeordnet. Im Unterschied zu der Ausführungsform gemäß Fig. 1 ist anstelle einer integrierten Klemmvorrichtung 24 eine separate Profilklemmvorrichtung vorhanden. In diesem gezeigten Ausführungsbeispiel sind anstelle eines senkrecht zur Seitenwand 2 verlaufenden Steges zwei Stege 7 dargestellt, wobei insgesamt das die Wärmeleitkontaktfläche 6 bildende Halbschalenprofil massiver ausgebildet ist. An den Rändern 8 der Wärmeleitkontaktfläche 6 sind im dargestellten Ausführungsbeispiel gegenüberliegende Rastarme 26 ausgebildet, die parallel zu den Seitenwänden 3 verlaufen und an ihren freien Enden in horizontale Stegabschnitte 10 übergehen. Diese Rastarme 26 weisen an ihren freien Enden Hinterschneidungen 27 auf. Die Profilklemmvorrichtung besteht aus Klemmkörpern 25, die im wesentlichen U-förmigen Querschnitt besitzen, wobei die beiden senkrechten U-Schenkel 28 endseitig nach außen abstehende Rastnocken 29 besitzen. Die senkrechten U-Schenkel 28 sind federelastisch ausgebildet, so daß sie beim Einstecken in die von den Rastarmen 26 begrenzte Einstecköffnung 17 aufeinanderzu verbogen werden und im eingerasteten Zustand, wenn die Rastnocken 29 in die Hinterschneidungen 27 eingerastet sind, wieder auseinanderfedern. Im eingerasteten Zustand der Klemmkörper 25 drücken diese aufgrund der Länge der Rastarme 26 die Rohrleitung 1 in das Halbschalenprofil der Wärmeleitkontaktfläche 6 hinein, so daß ein inniger Berührungskontakt vorhanden ist. Im dargestellten Ausführungsbeispiel sind ebenfalls die Klemmkörper 25 zur Verbindung des Wärmeübertragungsprofils 5 mit der Trägerwand 19 vorgesehen. Zu diesem Zweck sind an den Innenseiten der senkrechten Seitenwände 3 Aufnahmekammern 30 ausgebildet, in denen die Klemmkörper 25 mit ihren senkrechten U-Schenkeln 28 klemmend einrasten können. Die Klemmkörper 25 sind mit ihrem horizontalen U-Schenkel 31 in Ausnehmungen 32 in der Trägerwand 19 fixiert.

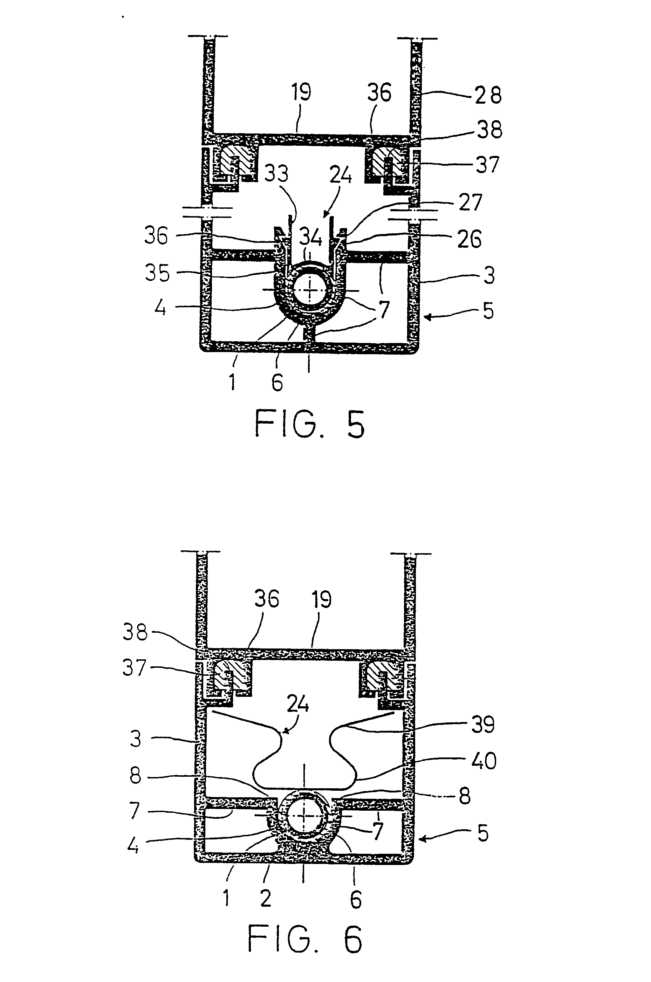

In Fig. 5 ist eine weitere Ausführungsform der Erfindung dargestellt. Auch hierbei sind wiederum gleiche Teile wie in den Fig. 1 bis 4 mit denselben Bezugsziffern versehen. Der Unterschied zu den vorhergehenden Ausgestaltungen liegt im wesentlichen in der Ausbildung der Klemmvorrichtung 24 sowie in der Befestigung zwischen dem Wärmeübertragungsprofil 5 und der Trägerwand 19. Die Klemmvorrichtung 24 besteht im dargestellten Ausführungsbeispiel aus einer U-förmigen Halteklammer 33, die mit ihrem U-Basisschenkel 34 bogenförmig verläuft und der Rohrleitung 1 angepaßt ist. An den senkrechten U-Schenkeln 35 sind an deren Außenseite Rastnocken 36 angeformt. Im eingesteckten Zustand der Halteklammer 33 hintergreifen diese Rastnocken 36 Hinterschneidungen 27 der Rastarme 26, die in Verlängerung der schalenförmigen Wärmeleitkontaktfläche 6 ausgebildet sind. Die senkrechten Schenkel 35 der Halteklammer 33 sind derart federnd elastisch, daß beim Einstecken der Halteklammer in die von den Rastarmen 26 begrenzte Einstecköffnung die U-Schenkel 35 aufeinanderzu gebogen werden und beim Erreichen der Hinterschneidungen 27 durch die Rastnocken wieder auseinanderfedern. Der Abstand der Rastnocken von dem Basisschenkel 34 ist derart gewählt, daß die Halteklammer die Rohrleitung 1 fest gegen die Wärmeleitkontaktfläche 6 drückt. Dabei erfolgt auch eine Wärmeübertragung über die Halteklammer 33 auf das Wärmeübertragungsprofil 5. Die Befestigung zwischen dem Wärmeübertragungsprofil 5 und der Trägerwand 19 besteht aus an der Trägerwand ausgebildeten Kammern 36, in denen Füllkörper 37 angeordnet sind. In diese Füllkörper 37 sind Steckprofile 38 eingesteckt, die an den Innenseiten der Seitenwände 3 des Wärmeübertragungsprofils 5 angeformt sind. Die Steckprofile 38 besitzen an ihrer Außenseite ein Zahnprofil, wodurch die Haltewirkung in dem Füllkörper verbessert wird. Der Füllkörper 37 besteht aus einem elastischen Material.

In Fig. 6 ist eine weitere Ausführungsform der Erfindung dargestellt, wobei gleiche Teile wie in den vorhergehenden Figuren mit denselben Bezugsziffern versehen sind. Bei dieser Ausführungsform dient als Klemmvorrichtung 24 eine Blattfeder 39, die sich mit ihren freien Schenkeln an den Steckprofilen 38 des Wärmeübertragungsprofils abstützt und mit einer Ausbuchtung 40 gegen die Rohrleitung 1 federnd unter Vorspannung anliegt, wodurch diese wiederum in die Wärmeleitkontaktfläche 6 hineingedrückt und dort fixiert wird. Indem der senkrecht verlaufende Steg 7 derart reduziert ist, daß die Wärmeleitkontaktfläche 6 unmittelbar an der horizontalen Seitenwand 2 angeformt ist, ergibt sich ein kompakter Aufbau des Wärmeübertragungsprofils 5. Die horizontalen Stege sind unmittelbar an den Längsrändern 8 der Wärmeleitkontaktfläche 6 angeformt.

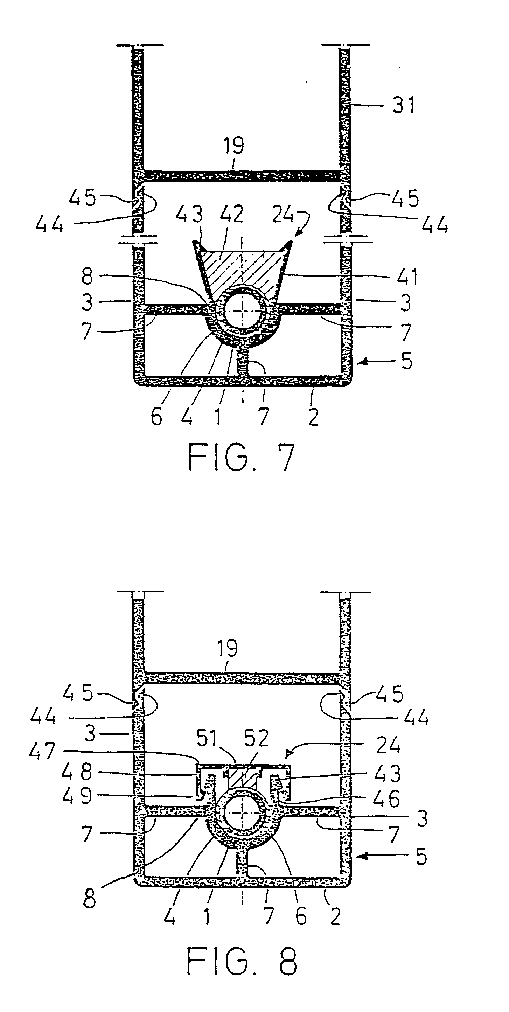

In Fig. 7 ist eine weitere alternative Ausführungsform eines erfindungsgemäßen Wärmeübertragungsprofils dargestellt, wobei wiederum gleiche Teile wie in den vorhergehenden Figuren mit denselben Bezugsziffern versehen sind. Die Ausbildung der Wärmeleitkontaktfläche 6 sowie der Stege 7 entspricht der Ausführungsform gemäß Fig. 2. Im Bereich des Ansatzpunktes der horizontalen Stege 7 sind am Profil der Wärmeleitkontaktfläche 6 in Verlängerung derselben an den gegenüberliegenden Rändern 8 federnde Haltearme 41 ausgebildet, zwischen denen ein Klemmkörper 42 eingespannt ist. Der Klemmkörper 42 ist im Querschnitt kegelstumpfförmig ausgebildet, wobei seine Spitze konkav verläuft und der Rohrleitung 1 angepaßt ist. Die Haltearme 41 weisen aufeinanderzu vorspringende Rastnocken 43 auf, die den Klemmkörper 42 in seinem eingeschobenen Zustand übergreifen und fixieren. Der Klemmkörper 42 und die Länge der Haltearme 41 ist derart bemessen, daß der Klemmkörper 42 mit einer gewissen Vorspannung auf die Rohrleitung 1 gedrückt wird, so daß diese in inniger Berührung mit der Wärmeleitkontaktfläche 6 steht. Das Wärmeübertragungsprofil 5 weist an den freien Enden seiner senkrechten Seitenwände 3 hakenförmige Fortsätze 44 auf, die zusammenwirken mit hakenförmigen Fortsätzen 45 an der Trägerwand 19, so daß hier eine Klemmverbindung zwischen der Trägerwand 19 und dem Wärmeübertragungsprofil 5 durch Verrasten der hakenförmigen Fortsätze miteinander erreicht wird. Diese Art der Verbindung wirkt spannungsausgleichend.

In Fig. 8 ist eine alternative Ausführungsform der Erfindung dargestellt, wobei gleiche Teile wie in den Fig. 1 bis 7 mit denselben Bezugsziffern versehen sind. Als Unterschied zu der Ausführungsform gemäß Fig. 7 sind an dem Profil der Wärmeleitkontaktfläche an den Rändern 8 Haltearme 46 ausgebildet, die mit einer im Querschnitt U-förmigen Halteklammer 47 zusammenwirken, und zwar mit deren freien U-Schenkeln 48. Die Haltearme 46 weisen an ihren freien Enden an deren Außenseite Rastnocken 43 auf, die von Rastnocken 49 an den U-Schenkeln 48 im aufgesteckten Zustand der Klammer 47 hintergriffen werden. Die freien U-Schenkel 48 sind federelastisch ausgebildet, so daß diese beim Aufstecken der Klammer 47 auseinanderfedern und im eingerasteten Zustand, siehe Fig. 8, hinter die Rastnocken 43 mit ihren Rastnocken 49 zurückfedern. An der der Rohrleitung zugekehrten Seite des Basisschenkels 51 ist ein Druckkörper 52 aus elastischem Material angeordnet, der im aufgesteckten Zustand der Klammer 47 die Rohrleitung 1 in das Profil der Wärmeleitkontaktfläche 6 hineindrückt.

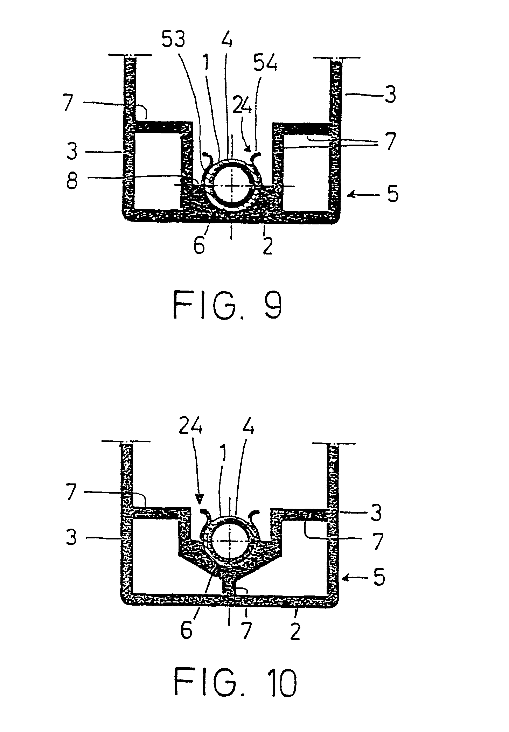

In Fig. 9 ist eine weitere Ausführungsform der Erfindung dargestellt, wobei wiederum gleiche Teile wie in den vorhergehenden Figuren mit denselben Bezugsziffern versehen sind. Die Klemmvorrichtung 24 besteht hier aus federnden Haltearmen 53, die an den Rändern 8 der Wärmeleitkontaktfläche 6 ausgebildet sind. Diese federnden Haltearme 53 sind kreisbogenförmig ausgebildet und haben an ihren freien Enden nach außen abgerundete Spitzen 54. Die von den abgerundeten Spitzen 54 begrenzte Einsecköffnung besitzt eine geringere Öffnungsweite als die Größe des Durchmessers der Rohrleitung 1, so daß beim Einführen der Rohrleitung 1 die Haltearme 53 auseinandergespreizt werden und bei der Anlage der Rohrleitung 1 an der Wärmeleitkontaktfläche 6 zurückfedern und hierbei die Rohrleitung 1 federnd umfassen, so daß diese gegen die Wärmeleitkontaktfläche 6 gedrückt wird. Die Wärmeleitkontaktfläche 6 ist im vorliegenden Ausführungsbeispiel unmittelbar an der Innenseite der horizontalen Seitenwand 2 ausgebildet, wobei eine Verbreiterung der Wandstärke vorgesehen ist. Die Stege 7, die mit den senkrechten Seitenwänden in Verbindung stehen, sind L-förmig ausgebildet.

In Fig. 10 ist die Ausbildung der Klemmvorrichtung des erfindungsgemäßen Wärmeübertragungsprofils 5 entsprechend der Ausbildung gemäß Fig. 9, und gleiche Teile wie in den übrigen Fig. 1 bis 9 sind mit denselben Bezugsziffern versehen. Auch hier sind die mit den Seitenwänden 3 in Verbindung stehenden Stege L-förmig ausgebildet, jedoch ist der zu den Seitenwänden 3 verlaufende L-Schenkel kürzer als in Fig. 9. Als Unterschied zu Fig. 9 ist hier wiederum ein parallel zu den Seitenwänden 3 und senkrecht zur Seitenwand 2 verlaufender Steg der Öffnung des Profils der Wärmeleitkontaktfläche 6 gegenüberliegend vorhanden. In der dargestellten Ausführungsform besitzt das Profil der Wärmeleitkontaktfläche 6 eine vergrößerte Wandstärke, wodurch die Speicherfähigkeit des Profils erhöht wird. Entsprechendes gilt auch für die Ausführungsform gemäß Fig. 9.

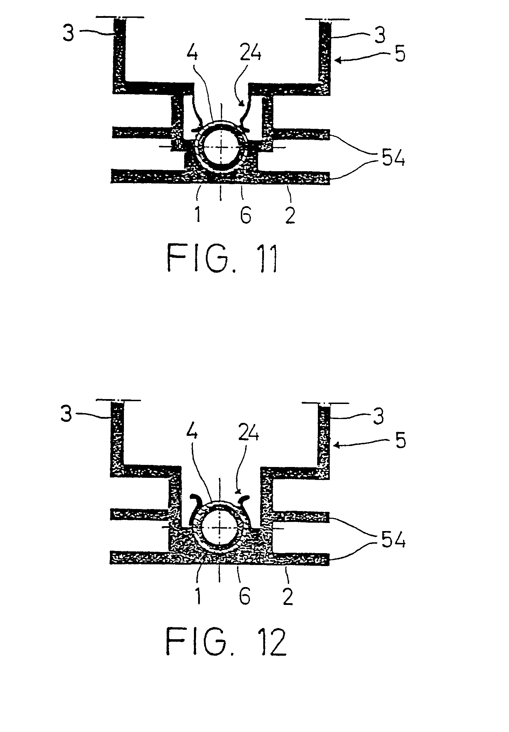

In den Fig. 11 und 12 ist wiederum je eine alternative Ausführungsform eines erfindungsgemäßen Wärmeübertragungsprofils 5 dargestellt, wobei gleiche Teile wie in den vorhergehenden Figuren mit denselben Bezugsziffern versehen sind. In Fig. 11 entspricht die Ausbildung des Profils der Wärmeleitkontaktfläche 6 der der Fig. 9, wobei jedoch die Klemmvorrichtung 24 entsprechend der Ausführungsform gemäß Fig. 1 ausgebildet ist. Die Ausführungsform gemäß Fig. 12 entspricht in der Ausbildung des Profils der Wärmeleitkontaktfläche 6 sowie der Klemmvorrichtung 24 der Ausbildungsform gemäß Fig. 9. Beiden Ausführungsformen gemäß Fig. 11 und Fig. 12 ist die gleiche Ausbildung der Seitenwände 3 des Wärmeübertragungsprofils 5 gemeinsam, wobei hier die Oberfläche der Seitenwände 3 durch Rippen 54 vergrößert ist, wodurch eine höhere Wärmeleistung erzielt wird.

Die in den Fig. 1 bis 12 dargestellten Ausführungsformen weisen Klemmvorrichtungen unterschiedlicher Gestalt auf. Diese Klemmvorrichtungen 24 können sich über die gesamte Länge der Wärmeleitkontaktfläche 6 erstrecken, oder sie können jeweils räumlich begrenzt ausgebildet sein, so daß sie sich nicht über die gesamte Länge der Wärmeleitkontaktfläche 6 erstrecken, d. h. daß mehrere derartiger Klemmvorrichtungen im Abstand zueinander vorgesehen sein können.

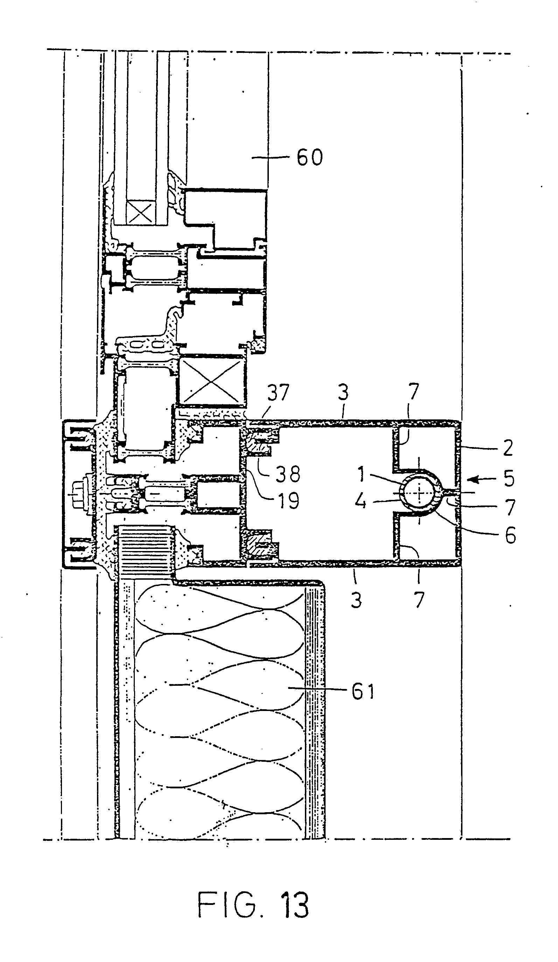

In Fig. 13 ist ein Ausführungsbeispiel der Erfindung gezeigt, wobei ein erfindungsgemäßes Wärmeübertragungsprofil 5 in Verbindung mit einer Fassadenkonstruktion gezeigt ist, die aus einem Fenster 60 und einem wärmegedämmten Brüstungselement 61 besteht. Daß erfindungsgemäße Wärmeübertragungsprofil 5 ist hier als waagerechter Brüstungsriegel verwendet. Ebenso ist bei einer entsprechenden Konstruktion der Einsatz eines erfindungsgemäßen Wärmeübertragungsprofils 5 als Pfosten möglich. Im übrigen sind hier gleiche Teile wie in den vorhergehenden Figuren mit denselben Bezugsziffern versehen. Als Klemmvorrichtung 24 für die Rohrleitung 1 innerhalb des erfindungsgemäßen Wärmeübertragungsprofils 5 sind die in vorhergehenden Figuren beschriebenen Klemmvorrichtungen alternativ möglich. In der dargestellten Konstruktion gemäß Fig. 13 und in der Ausführungsform gemäß Fig. 1 sowie in den übrigen Ausführungsformen der Fig. 2 bis 12 ist das erfindungsgemäße Wärmeübertragungsprofil 5 als tragendes Element ausgebildet, d. h. es ist Teil einer Fassade, und die übrigen Fassadenelemente sind am Wärmeübertragungsprofil befestigt.

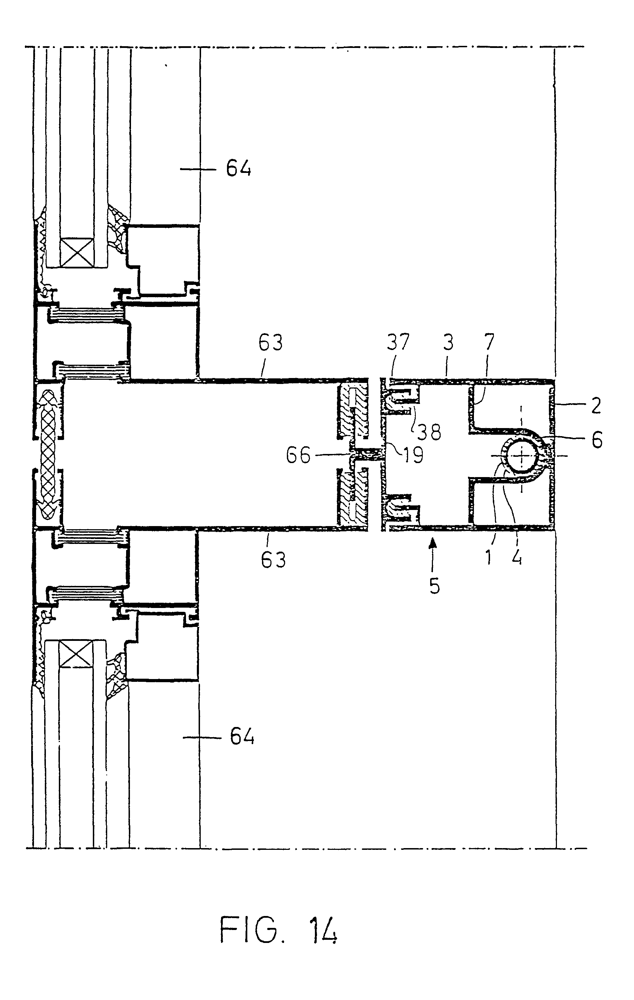

In Fig. 14 ist nun eine Ausführungsform dargestellt, wo das erfindungsgemäße Wärmeübertragungsprofil 5 nicht als tragendes Element dient, vielmehr dient hier als tragendes Element der Pfosten 63. In Fig. 14 ist die Verwendung des erfindungsgemäßen Wärmeübertragungsprofils 5 in Verbindung mit einer Festverglasung 64 und senkrechten Doppelpfosten 63 dargestellt. Dabei ist die tragende Wand 19 über einen T-Flansch 66, der innerhalb des senkrechten Doppelpfostens 63 geführt ist, mit diesem verbunden. Der senkrechte Doppelpfosten 63 übernimmt dabei alle tragenden Funktionen. Im übrigen sind gleiche Teile wie in den vorgehenden Figuren mit denselben Bezugsziffern versehen. Als Klemmvorrichtung kommen die in den vorhergehenden Figuren beschriebenen Klemmvorrichtungen 24 alternativ in Frage.

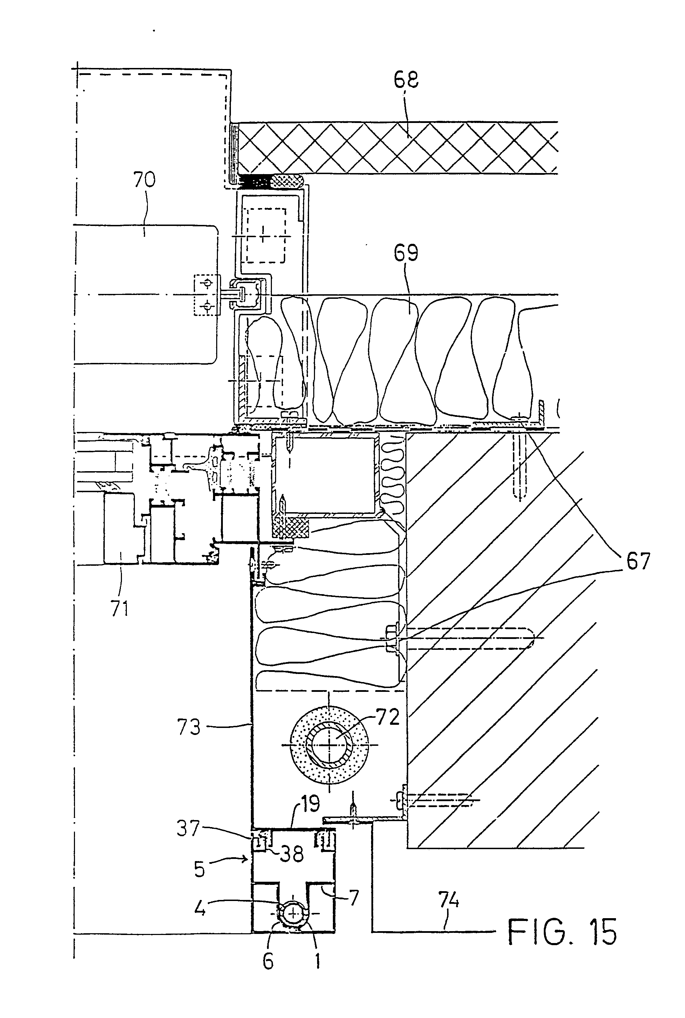

In Fig. 15 ist ein weiteres Anwendungsbeispiel eines erfindungsgemäßen Wärmeübertragungsprofils dargestellt. Hierbei ist ein Wandanschluß 67 in Verbindung mit einer vorgehängten Fassade 68 gezeigt. Eine Wärmedämmung 69 sowie ein äußerer Sonnenschutz 70 und ein zu öffnendes Fenster 71 sind ebenfalls dargestellt. Eine senkrechte Heiz-Kühl-Wasserversorgungsleitung 72 verläuft innerhalb einer Fensterlaibungsverkleidung 73. Die Fensterlaibungsverkleidung 73 dient gleichzeitig als Träger für das erfindungsgemäße Wärmeübertragungsprofil 5, indem an dem Laibungselement die Trägerwand 19 angeformt ist.

Weiterhin ist eine Wandverkleidung 74 vorgesehen. In diesem Ausführungsbeispiel wird aus dem erfindungsgemäßen Wärmeübertragungsprofil ein Rahmen gebildet-, der in den Fensterausschnitt auf der Seite des Innenraums eingesetzt wird, so daß hier ein Rahmenprofil unabhängig von der Fassade selbst gebildet wird.

Die Dimensionierung der Wärmeübertragungsleitflächen und der Wärmeleitquerschnitte von der Wärmetransportflüssigkeit über die Rohrleitung, das Wärmeleitkontaktelement, die Wärmeleitkontaktfläche und die Wärmeleitstege an das Wärmeübertragungselement erfolgt unter Berücksichtigung der Wärmeabgabe auf der Raumseite, nämlich von der Oberfläche des Wärmeübertragungsprofils an die Raumluft, und zwar so, daß ein optimaler Wärmefluß bei geringem Materialanteil so erfolgt, daß durch eine niedrige Temperatur der Transportflüssigkeit eine gleichmäßige Temperatur auf der Oberfläche des Wärmeübertragungselementes erzielt wird. Die Wärmestromdichte vom Wärmeübertragungsprofil an die Umgebung bestimmt die notwendige Fläche der Stege 7 unter Berücksichtigung der Steglänge sowie der Dicke des Wärmeleitkontaktelementes 4. Dieser Wärmestrom setzt unter Berücksichtigung der Fluidströmung in der Rohrleitung 1 den Durchmesser der Rohrleitung 1 fest. Während das Wärmeübertragungsprofil aus Kostengründen aus einem preiswerten Metall, insbesondere Aluminium, besteht, entspricht das Material der Wärmetransportflüssigkeit führenden Rohrleitung einem im Heizungsbau bewährten korrosionsbeständigen Material, insbesondere Kupfer.

Die infolge unterschiedlicher Ausdehnungskoeffizienten verschiedener Metalle auftretende unterschiedliche Längenveränderung und die hierdurch hervorgerufene Flächenreibung zwischen verschiedenen Metallen mit Auftreten von Geräuschen bei Temperaturänderungen wird erfindungsgemäß durch das Wärmeleitkontaktelement verhindert, das zwischen der Rohrleitung 1 und der Wärmeleitkontaktfläche 6 angeordnet ist. Der niedrigere Ausdehnungskoeffizient von z. B. Kupfer erzeugt gegenüber dem höheren Ausdehnungskoeffizienten von z. B. Aluminium bei gleicher Temperaturveränderung unterschiedliche Längenveränderungen. Durch entsprechende Auslegung und Dimensionierung des Wärmeleitkontaktelementes kann erfindungsgemäß die Temperatur der Wärmetransportflüssigkeit in der Rohrleitung derart gewählt werden, daß die geringere Ausdehnung der Rohrleitung gegenüber der höheren Ausdehnung der Wärmeleitkontaktfläche bei gleicher Temperatur durch die höhere Temperatur der Wärmetransportflüssigkeit kompensiert wird. Durch das erfindungsgemäße Wärmeleitkontaktelement kann demnach eine Steuerung dahingehend erfolgen, daß die gleiche Längenveränderung trotz verschiedener Materialien bei der Rohrleitung und bei der Wärmeleitkontaktfläche erzielt wird. Die Auslegung des Wärmeleitkontaktelementes 4 erfolgt in Abhängigkeit der Werkstoffkombination des Wärmeübertragungsprofiles 5 mit der Rohrleitung 1. Die Längendifferenz zwischen dem Wärmeübertragungsprofil 5 mit dem zugehörigen Längenausdehnungskoeffizienten und der Rohrleitung 1 mit dem zugehörigen Längenausdehnungskoeffizienten wird infolge der Temperaturgradienten im Wärmeleitkontaktelement eliminiert. Schubspannungen an den Werkstofftrennstellen werden damit abgebaut.

Es liegt im Rahmen der Erfindung, die Wärmeübertragungsprofile von der Fassadenkonstruktion unabhängig, nämlich in Verbindung mit anderen Bauteilen, wie z. B. Fenster, Wände, Brüstungen und Decken, raumseitig anzuordnen, ebenso können den Wärmeübertragungsprofilen Luftführungen für eine Raumlüftung zugeordnet werden. Weiterhin können statische oder dynamische Heizkörper integriert werden. Ebenso liegt es im Rahmen der Erfindung, die Wärmeübertragungsprofile 5 gemäß der Erfindung bei allen produktiven Industrie- und Fertigungswärmeprozessen anzuwenden.

**Patentansprüche**

1. Raumtemperierungselement, bestehend aus mindestens einem metallischen Wärmeübertragungsprofil (5) sowie einer Rohrleitung (1) für ein Wärmetransportmedium, die an einer die Rohrleitung (1) teilweise umfassenden Wärmeleitkontaktfläche (6) anliegt, wobei die Wärmeleitkontaktfläche (6) über mindestens einen Steg (7) zur Wärmeleitung mit dem Wärmeübertragungsprofil (5) einstückig verbunden ist, und das Wärmeübertragungsprofil (5) die Form einer Hohlstütze und/oder eines Hohlriegels hat und mit seinen Seitenwänden (2, 3) einen Hohlraum umschließt, in dem die mit den Seitenwänden (2, 3) wärmeleitend verbundene Wärmeleitkontaktfläche (6) mit der auf ihr befestigten Rohrleitung (1) in Längsrichtung des Wärmeübertragungsprofils (5) verläuft, wobei zwischen der Wärmeleitkontaktfläche (6) und der Rohrleitung (1) ein aus Kunststoff bestehendes Wärmeleitkontaktelement (4) in Form eines Kontaktfilms, einer Folie, einer Manschette oder einer Beschichtung angeordnet ist und die Rohrleitung (1) auf der Wärmeleitkontaktfläche (6) derart klemmend gehalten ist, daß aufgrund des Wärmeleitkontaktelementes (4) eine Relativbewegung zwischen der Rohrleitung (1) und der Wärmeleitkontaktfläche (6) bei optimalen Wärmefluß möglich ist.

2. Raumtemperierungselement nach Anspruch 1, *dadurch gekennzeichnet*, daß die Rohrleitungen (1) aus Metall, insbesondere aus Kupfer, bestehen.

3. Raumtemperierungselement nach Anspruch 1 oder 2, *dadurch gekennzeichnet*, daß die Rohrleitungen (1) durch ein Stütz-Isolierelement (18) von einer Trägerwand (19), mit der das Wärmeübertragungsprofil (5) lösbar verbunden ist, wärmedämmend und rohrführend getrennt sind.

4. Raumtemperierungselement nach einem oder mehreren der Ansprüche 1 bis 3, *dadurch gekennzeichnet*, daß die Wärmeleitkontaktflächen (6) die Rohrleitung (1) halbkreisförmig umfassen.

5. Raumtemperierungselement nach Anspruch 4, *dadurch gekennzeichnet*, daß die Wärmeleitkontaktflächen (6) von einem Halbschalenprofil gebildet sind.

6. Raumtemperierungselement nach einem oder mehreren der Ansprüche 1 bis 5, *dadurch gekennzeichnet*, daß innerhalb des Wärmeübertragungsprofils (5) Federelemente derart zur klemmenden Halterung der Rohrleitungen (1) angeordnet sind, daß diese unter Erzeugung einer Federspannung zwischen Rohrleitung und Wärmeübertragungsprofil angeordnet sind.

7. Raumtemperierungselement nach Anspruch 6, *dadurch gekennzeichnet*, daß die Federelemente als Blattfedern (39) ausgebildet sind, die sich mit ihren beiden freien Enden an einander gegenüberliegenden Wänden (3) des Wärmeübertragungsprofils (5) abstützen und mit einer zwischen den freien Enden ausgebildeten Ausbuchtung (40) an der Rohrleitung (1).

8. Raumtemperierungselement nach einem oder mehreren der Ansprüche 5 bis 7, *dadurch gekennzeichnet*, daß am Halbschalenprofil der Wärmeleitkontaktfläche (6) einander gegenüberliegende, eine Einstecköffnung (17) begrenzende, entsprechend dem Durchmesser der Rohrleitung auseinanderspreizbare federnde Haltearme (53) ausgebildet sind, die die Rohrleitung (1) klemmend in dem Halbschalenprofil der Wärmeleitkontaktfläche (6) halten.

9. Raumtemperierungselement nach einem oder mehreren der Ansprüche 5 bis 7, *dadurch gekennzeichnet*, daß am Halbschalenprofil der Wärmeleitkontaktfläche (6) einander gegenüberliegende Rastarme (26, 41, 46) ausgebildet sind, die mit ihren Rastnocken (27, 43) zwischen sich und der Rohrleitung (1) angeordneten Druckkörper (25, 42, 52) klemmend halten.

10. Raumtemperierungselement nach einem oder mehreren der Ansprüche 5 bis 9, *dadurch gekennzeichnet*, daß das Halbschalenprofil der Wärmeleitkontaktfläche (6) mindestens über drei Stege (7) mit dem Wärmeübertragungsprofil (5) verbunden ist.

11. Raumtemperierungselement nach Anspruch 10, *dadurch gekennzeichnet*, daß einer der Stege der Öffnung (20) des Halbschalenprofils der Wärmeleitkontaktfläche (6) gegenüberliegend ausgebildet ist und die beiden anderen Stege (7) gegenüber diesem Steg um 90° versetzt und einander gegenüberliegend ausgebildet sind.

12. Raumtemperierungselement nach Anspruch 11, *dadurch gekennzeichnet*, daß die beiden anderen Stege (7) bündig jeweils an einem Längsrand (8) des Halschalenprofils der Wärmeleitkontaktfläche (6) ansetzen.

13. Raumtemperierungselement nach Anspruch 11, *dadurch gekennzeichnet*, daß die einander gegenüberliegenden Stege aus einem parallel zur horizontalen Seitenwand (2) des Wärmeübertragungsprofils (5) verlaufenden Stegabschnitt (10) sowie einem daran anschließenden, parallel zur senkrechten Seitenwand (3) verlaufenden Verlängerungsabschnitt (9), der mit dem Längsrand (8) der Wärmeleitkontaktfläche (6) verbunden ist, zusammensetzen.

14. Raumtemperierungselement nach Anspruch 13, *dadurch gekennzeichnet*, daß im Verbindungsbereich des Verlängerungsabschnitts (9) und des Stegabschnitts (10) die federnden Haltearme (16) derart angeordnet sind, daß sie in Richtung auf die Wärmeleitkontaktfläche (6) weisen und mit ihren abgebogenen freien Enden die Einstecköffnung (17) umschließen, deren Öffnungsweite kleiner ist als der Außendurchmesser der Rohrleitung (1), so daß im eingesteckten Zustand der Rohrleitung (1) diese von den Federarmen klemmend im Profil der Wärmeleitkontaktfläche (6) gehalten wird.

15. Raumtemperierungselement nach einem oder mehreren der Ansprüche 8 bis 14, *dadurch gekennzeichnet*, daß die federnden Haltearme (53) kreisbogenförmig ausgebildet sind und mit ihren nach außen umgebogenen Enden die Einstecköffnung (17) bilden, deren Öffnungsweite kleiner ist als der Außendurchmesser der Rohrleitung (1) und die Kreisbogenform der Federarme derart ist, daß im eingesteckten Zustand der Rohrleitung (1) diese von den Federarmen klemmend im Profil der Wärmeleitkontaktfläche (6) gehalten wird.

16. Raumtemperierungselement nach einem oder mehreren der Ansprüche 9 bis 13, *dadurch gekennzeichnet*, daß eine Klammer (47) mit U-förmigem Querschnitt mit ihren federelastischen freien U-Schenkeln (48), auf deren freien Enden Rastnocken (49) ausgebildet sind, auf die Rastarme (46) aufgeschoben ist und an der Innenseite des Basisschenkels (51) der Klammer (47) der Druckkörper (52) angeordnet ist.

17. Raumtemperierungselement nach einem oder mehreren der Ansprüche 9 bis 13, *dadurch gekennzeichnet*, daß der Druckkörper (25) U-förmigen Querschnitt besitzt und senkrechte U-Schenkel (28), auf deren freien Enden Rastnocken (29) ausgebildet sind, die in Hinterschneidungen (27) der Rastarme (26) im eingesteckten Zustand einrasten, wobei die Rohrleitung (1) innerhalb des Profils der Wärmeleitkontaktfläche (6) klemmend gehalten wird.

18. Raumtemperierungselement nach einem oder mehreren der Ansprüche 9 bis 13, *dadurch gekennzeichnet*, daß der Druckkörper (42) im Querschnitt kegelstumpfförmig ausgebildet ist und seine Spitze kreisbogenförmig abgerundet unter Anpassung an die Form der Rohrleitung (1) ausgebildet ist und im eingesteckten Zustand von endseitigen Rastnocken (43) der Haltearme (41) hintergriffen wird, so daß die Rohrleitung (1) im Profil der Wärmeleitkontaktfläche (6) klemmend gehalten wird.

19. Raumtemperierungselement nach einem oder mehreren der Ansprüche 9 bis 13, *dadurch gekennzeichnet*, daß der Druckkörper als im Querschnitt U-förmige Halteklammer (33) ausgebildet ist, deren Basisschenkel bogenförmig verläuft, und zwar unter Anpassung an die Form der Rohrleitung (1) und deren senkrechte U-Schenkel (35) mit nach außen ragenden Rastnocken (36) in Hinterschneidungen (27) der Rastarme (26) derart eingreifen, daß im eingesteckten Zustand der Halteklammer (33) die Rohrleitung (1) im Profil der Wärmeleitkontaktfläche (6) klemmend gehalten wird.

20. Raumtemperierungselement nach einem oder mehreren der Ansprüche 1 bis 19, *dadurch gekennzeichnet*, daß das Wärmeübertragungsprofil (5) mit einer Trägerwand (19) derart lösbar verbindbar ist, daß eine gleitende Relativbewegung zwischen beiden Teilen möglich ist.

21. Raumtemperierungselement nach einem oder mehreren der Ansprüche 1 bis 20, *dadurch gekennzeichnet*, daß das Wärmeübertragungsprofil (1) als tragendes Fassadenelement ausgebildet ist.

22. Raumtemperierungselement nach einem oder mehreren der Ansprüche 1 bis 21, *dadurch gekennzeichnet*, daß das Wärmeübertragunsprofil (5) Teil eines Verblendungselementes ist.

## Claims

1. Room temperature-regulating element, comprising at least one metallic heat transfer section (5) as well as a conduit (1) for a heat-carrying medium, which bears against a heat-conducting contact surface (6) partly surrounding the conduit (1) the heat-conducting contact surface (6) being connected in one piece to the heat transfer section (5) by way of at least one web (7) for the conduction of heat and the heat transfer section (5) being in the form of a hollow support and/or a hollow tie and with its side walls (2, 3) surrounding a hollow space, in which the heat-conducting contact surface (6) connected in a heat-conducting manner to the side walls (2, 3), with the conduit (1) attached thereto, extends in the longitudinal direction of the heat transfer section (5), a heat-conducting contact member (4) consisting of synthetic material and in the form of a contact film, foil, sleeve or coating, being disposed between the heat-conducting contact surface (6) and the conduit (1) and the conduit (1) being held in a clamped manner on the heat-conducting contact surface (6) so that on account of the heat-conducting contact member (4), a relative movement between the conduit (1) and the heat-conducting contact surface (6) is possible with the optimum flow of heat.

2. Room temperature-regulating element according to Claim 1, characterised in that the conduits (1) consist of metal, in particular of copper.

3. Room temperature-regulating element according to Claim 1 or 2, characterised in that the conduits (1) are separated in a thermally insulating and pipe-guiding manner by a support-insulating member (18) from a support wall (19), to which the heat transfer section (5) is detachably connected.

4. Room temperature-regulating element according to one or more of Claims 1 to 3, characterized in that the heat-conducting contact surfaces (6) surround the conduit (1) in the shape of a semi-circle.

5. Room temperature-regulating element according to Claim 4, characterised in that the heat-conducting contact surfaces (6) are formed by a half shell contour.

6. Room temperature-regulating element according to one or more of Claims 1 to 5, characterised in that disposed inside the heat transfer section (5) are spring members for clamping the conduits (1) so that with the production of spring tension these spring members are disposed between the conduit and the heat transfer section.

7. Room temperature-regulating element according to Claim 6, characterised in that the spring member are constructed as leaf springs (39), which are supported by their two free ends on opposite walls (3) of the heat transfer section (5) and on the conduit (1) by a bulge (40) formed between the free ends.

8. Room temperature-regulating element according to one or more of Claims 5 to 7, characterised in that formed on the half shell contour of the heat-conducting contact surface (6) are resilient retaining arms (53) located opposite each other, defining an insertion opening (17) and able to expand corresponding to the diameter of the conduit, which arms hold the conduit (1) in a clamped manner in the half shell contour of the heat-conducting contact surface (6).

9. Room temperature-regulating element according to one or more of Claims 5 to 7, characterised in that formed on the half shell contour of the heat-conducting contact surface (6) are opposing locking arms (26, 41, 46), which with their locking lugs (27, 43) clamp pressing members (25, 42, 52) disposed between them and the conduit (1).

10. Room temperature-regulating element according to one or more of Claims 5 to 9, characterised in that the half shell contour of the heat-conducting contact surface (6) is connected by at least three webs (7) to the heat transfer section (5).

11. Room temperature-regulating element according to Claim 10, characterised in that one of the webs is constructed to lie opposite the opening (20) of the half shell contour of the heat-conducting contact surface (6) and the two other webs (7) are staggered by 90° with respect to this web and constructed to lie one opposite the other.

12. Room temperature-regulating element according to Claim 11, characterised in that the two other webs (7) are fastened in a flush manner in each case to a longitudinal edge (8) of the half shell contour of the heat-conducting contact surface (6).

13. Room temperature-regulating element according to Claim 11, characterised in that opposing webs are composed of a web section (10) extending parallel to the horizontal side wall (2) of the heat transfer section (5) and of an adjoining extension section (9) extending parallel to the vertical side wall (3), which extension section (9) is connected to the longitudinal edge (8) of the heat-conducting contact surface (6).

14. Room temperature-regulating element according to Claim 13, characterised in that in the connecting region of the extension section (9) and of the web section (10), the resilient retaining arms (16) are arranged such that they point in the direction of the heat-conducting contact surface (6) and with their bent, free ends surround the insertion opening (17), whereof the opening width is less than the outer diameter of the conduit (1), so that when the conduit (1) is inserted, it is held by

17

the spring arms in a clamped manner in the contour of the heat-conducting contact surface (6).

15. Roam temperature-regulating element according to one or more of Claims 8 to 14, characterised in that the resilient retaining arms (53) are constructed in the shape of an arc of a circle and with their outwardly bent ends form the insertion opening (17), whereof the opening width is smaller than the outer diameter of the conduit (1) and the circular arc shape of the spring arms is such that when the conduit (1) is inserted, the latter is held by the spring arms in a clamped manner in the contour of the heat-conducting contact surface (6).

16. Room temperature-regulating element according to one or more of Claims 9 to 13, characterised in that a clip (47) of U-shaped cross-section is slid by its resiliently yielding free U-sides (48), on the free ends of which locking lugs (49) are formed, onto the locking arms (46) and located on the inside of the base member (51) of the clip (47) is the pressing member (52).

17. Room temperature-regulating element according to one or more of Claims 9 to 13, characterised in that the pressing member (25) has a U-shaped cross-section and vertical U-sides (28), formed on the free ends of which are locking lugs (29), which engage in back-tapers (27) of the locking arms (26), in the inserted state, the conduit (1) being held in a clamped manner within the contour of the heat-conducting contact surface (6).

18. Room temperature-regulating element according to one or more of Claims 9 to 13, characterised in that the pressing. member (42) has a frustoconical cross-section and its tip is rounded off in the shape of an arc of a circle adapted to the shape of the conduit (1) and when inserted, terminal locking cams (43) of the retaining arms (41) engage therebehind, so that the conduit (1) is held in a clamped manner in the contour of the heat-conducting contact surface (6).

19. Room temperature-regulating element according to one or more of Claims 9 to 13, characterised in that the pressing member is constructed as a retaining clip (33) of U-shaped cross-section, whereof the base member extends in a curved manner and indeed is adapted to the shape of the conduit (1) and whereof the vertical U-sides (35) engage with outwardly projecting locking lugs (36) in back-tapers (27) of the locking arms (26) so that in the inserted state of the retaining clip (33), the conduit (1) is held in a clamped manner in the contour of the heat-conducting contact surface (6).

20. Room temperature-regulating element according to one or more of Claims 1 to 19, characterised in that the heat transfer section (5) can be releasably connected to a support wall (19) so that

18

a sliding relative movement between both parts is possible.

21. Room temperature-regulating element according to one or more of Claims 1 to 20, characterised in that the heat transfer section (1) is constructed as a supporting facade element.

22. Room temperature-regulating element according to one or more of Claims 1 to 21, characterised in that the heat transfer section (5) is part of a facing element.

**Revendications**

1. Elément pour climatiser des locaux, comprenant au moins un profilé métallique de transfert thermique (5), ainsi qu'un conduit tubulaire (1) pour un agent caloporteur qui est appliqué sur une surface de contact conductrice de la chaleur (6) entourant partiellement le conduit tubulaire, la surface de contact (6) étant reliée par au moins une barrette de transfert thermique (7) au profilé de transfert thermique (5) pour ne former qu'une pièce avec ce dernier et le profilé (5) ayant la forme d'un support creux et/ou d'un verrou creux et entourant par ses parois latérales (2, 3) une concavité dans laquelle s'étend la surface de contact (6) sur laquelle est fixé le conduit tubulaire (1) et qui est reliée aux parois latérales (2, 3) de manière à transmettre la chaleur, dans la direction longitudinale du profilé de transfert thermique (5), un élément de contact, conducteur de la chaleur (4) réalisé en matière synthétique et présentant la forme d'un film de contact, d'une feuille, d'un manchon ou d'un revêtement étant agencé entre la surface de contact (6) et le conduit (1) de manière telle que, grâce à l'élément de contact(4), un mouvement relatif entre le conduit tubulaire (1) et la surface de contact (6) soit possible pour une circulation optimale de la chaleur.

2. Elément pour climatiser des locaux, selon la revendication 1, caractérisé en ce que les conduits tubulaires (1) sont en métal, en particulier en cuivre.

3. Elément pour climatiser des locaux selon la revendication 1 ou 2, caractérisé en ce que les conduits tubulaires (1) sont séparés par un élément de support et d'isolation (18) d'une paroi de support (19) à laquelle est relié de manière amovible le profilé de transfert thermique (5), de manière à ménager un espace calorifuge et d'agencement des conduits.

4. Elément pour climatiser des locaux selon l'une ou plusieurs des revendications 1 à 3, caractérisé en ce que les surfaces de contact (6) conductrices de la chaleur entourent le conduit tubulaire (1) en demi-cercle.

5. Elément pour climatiser des locaux, selon la revendication 4, caractérisé en ce que les surfaces de contact (6) sont constituées par un profilé en demi-coupelle.

6. Elément pour climatiser des locaux, selon l'une ou plusieurs des revendications 1 à 5, caractérisé en ce que, à l'intérieur du profilé de transfert thermique (5), des éléments de ressort pour un maintien serré des conduits tubulaires (1) sont disposés de manière telle qu'ils soient agencés entre le conduit et le profilé de transfert thermique en engendrant une tension élastique.

7. Elément pour climatiser des locaux, selon la revendication 6, caractérisé en ce que les éléments de ressort ont la forme de languettes (39) qui reposent par leurs deux extrémités libres sur des parois en regard (3) du profilé de transfert thermique (5) et par une excroissance (40), formée entre les extrémités libres, sur le conduit (1).

8. Elément pour climatiser des locaux, selon l'une ou plusieurs des revendications 5 à 7, caractérisé en ce que, sur le profilé en demi-coupelle de la surface de contact (6) conductrice de la chaleur, sont formés des bras de maintien (53) élastiques qui sont situés en regard, délimitent une ouverture d'introduction (17) et peuvent être écartés en fonction du diamètre du conduit tubulaire, ces bras maintenant le conduit tubulaire (1) serré dans le profilé en demi-coupelle de la surface de contact (6).

9. Elément pour climatiser des locaux, selon l'une ou plusieurs des revendications 5 à 7, caractérisé en ce que, sur le profilé en demi-coupelle de la surface de contact (6)sont formés des bras d'arrêt (26, 41, 46) qui sont situés en regard et qui maintiennent par leurs ergots d'arrêt (27, 43) un corps de pression (25, 42, 52) disposé entre eux et le conduit tubulaire (1).

10. Elément pour climatiser des locaux, selon l'une ou plusieurs des revendications 5 à 9, caractérisé en ce que le profilé en demi-coupelle de la surface de contact (6) est relié par au moins trois barrettes (7) au profilé de transfert thermique (5).

11. Elément pour climatiser des locaux, selon la revendication 10, caractérisé en ce qu'une des barrettes est agencée en regard de l'ouverture (20) du profilé en demi-coupelle de la surface de contact (6) et que les deux autres barrettes (7) sont agencées avec un décalage de 90° par rapport à ladite barrette et situées en regard.

12. Elément pour climatiser des locaux, selon la revendication 11, caractérisé en ce que les deux autres barrettes (7) sont respectivement raccordées franc-bord sur un bord longitudinal (8) du profilé en demi-coupelle de la surface de contact (6).

13. Elément pour climatiser des locaux, selon la revendication 11, caractérisé en ce que les barrettes disposées en regard comprennent une portion (10) qui s'étend parallèlement à la paroi longitudinale (2) du profilé de transfert thermique (5), ainsi qu'un prolongement (9) qui s'étend parallèlement à la paroi verticale (3) et est relié au bord longitudinal (8) de la surface de contact (6) conductrice de la chaleur.

14. Elément pour climatiser des locaux, selon la revendication 13, caractérisé en ce que, dans la région de connexion du prolongement (9) et de la portion de barrette (10), les bras élastiques de maintien (16) sont agencés de manière à ce qu'ils soient orientés dans la direction de la surface de contact (6) et que leurs extrémités libres recourbées entourent l'ouverture d'introduction (17) dont la largeur d'ouverture est inférieure au diamètre extérieur du conduit tubulaire (1), le conduit tubulaire (1) engagé étant ainsi maintenu serré dans le profilé de la surface de contact (6) au moyen des bras élastiques.

15. Elément pourclimatiser des locaux, selon l'une ou plusieurs des revendications 8 à 14, caractérisé en ce que les bras élastiques (53) ont une forme en arc de cercle et que leurs extrémités recourbées vers l'extérieur forment l'ouverture d'introduction (17) dont la largeur est inférieure au diamètre extérieur du conduit tubulaire (1), et que la forme en arc de cercle des bras élastiques est telle que, lorsque le conduit tubulaire (1) est introduit, il soit maintenu serré par les bras élastiques dans le profilé de la surface de contact (6).

16. Elément pour climatiser des locaux, selon l'une ou plusieurs des revendications 9 à 13, caractérisé en ce qu'il comprend une pince (47) ayant une section en U et des branches libres élastiques (48), des ergots d'arrêt (49) étant disposés sur les extrémités libres de ces branches, sur lesquels des bras d'arrêt (46) ont été glissés et en ce que le corps de pression (52) est agencé sur la face intérieure de la base (51) de la pince (47).

17. Elément pour climatiser des locaux, selon l'une ou plusieurs des revendications 9 à 13, caractérisé en ce que le corps de pression (25) présente une section en U et des branches verticales (28) sur les extrémités libres desquelles sont formés des ergots d'arrêt (29), qui, dans l'état engagé, s'introduisent dans des contre-dépouilles (27) des bras d'arrêt (26), le conduit tubulaire (1) étant ainsi maintenu serré dans le profilé de la surface de contact (6).

18. Elément pour climatiser des locaux, selon l'une ou plusieurs des revendications 9 à 13, caractérisé en ce que le corps de pression (42) a une section transversale tronconique et que sa pointe est arrondie en arc de cercle pour s'adapter à la forme du conduit tubulaire (1), des ergots d'arrêt (43) disposés aux extrémités des bras de maintien (41) s'insérant, dans l'état engagé, derrière ledit corps de pression, le conduit tubulaire (1) étant ainsi maintenu serré dans le profilé de la surface de contact (6).

19. Elément pour climatiser des locaux, selon l'une ou plusieurs des revendications 9 à 13, caractérisé en ce que le corps de pression a la forme d'une pince de maintien (33) de section transversale en U et dont la base est arquée pour s'adapter à la forme du conduit tubulaire (1) et dont les branches verticales (35) s'insèrent par des ergots d'arrêt (36) qui font saillie vers l'extérieur, dans des contredépouilles (27) des bras d'arrêt (26), de manière telle que, lorsque la pince de maintien (33) est introduite, le conduit tubulaire (1) soit maintenu serré dans le profilé de la surface de contact (6).

20. Elément pour climatiser des locaux, selon l'une ou plusieurs des revendications 1 à 19, caractérisé en ce que le profilé de transfert thermique (5) est relié de manière amovible à une paroi de support (19) de manière à permettre un glissement relatif entre les deux éléments.

21. Elément pour climatiser des locaux, selon l'une ou plusieurs des revendications 1 à 20, caractérisé en ce que le profilé de transfert thermique (1) est réalisé en tant qu'élément porteur de façade.

22. Elément pour climatiser des locaux, selon l'une ou plusieurs des revendications 1 à 21, caractérisé en ce que le profilé de transfert thermique (5) fait partie d'un élément de revêtement.

FIG. 1

FIG. 2

FIG. 3

FIG. 4

FIG. 5

FIG. 6

FIG. 7

FIG. 8

FIG. 9

FIG. 10

FIG. 11

FIG. 12

FIG. 13

FIG. 14

FIG. 15